# EUROPEAN PATENT SPECIFICATION

(11) **EP 3 323 272 B1**
(45) Date of publication and mention of the grant of the patent: **14.08.2019**
(21) Application number: 16722152.2
(22) Date of filing: 09.05.2016
(51) Int. Cl.: H05B 3/06, A47J 36/24, H05B 3/34, H05B 3/58

(54) **DISPOSABLE CUP FOR HEATING FOOD PRODUCTS**
EINWEG-BEHÄLTER ZUM ERHITZEN VON NAHRUNGSMITTELN
GOBELET JETABLE PERMETTANT DE CHAUFFER DES PRODUITS ALIMENTAIRES

(30) Priority: 16.07.2015 EP 15177001
(43) Date of publication of application: 23.05.2018
(73) Proprietor: Société des Produits Nestlé S.A., 1800 Vevey (CH)
(72) Inventor: SOPPELSA, Yves, Singapore 169813 (SG); SALAM, Budiman, Singapore 737940 (SG); WAI, Lai Lai, Singapore 530945 (SG)
(74) Representative: Mollet, Beat Max
(86) International application number: PCT/EP2016/060271
(87) International publication number: WO 2017/008932

(56) References cited:
- GB-A- 2 490 132
- JP-A- 2004 261 493
- US-A- 5 436 429
- US-A1- 2004 139 860

## Description

The present invention relates to a disposable cup intended for heating up for example a food product such as a soup, coffee beverage or instant noodle product, or for maintaining such a food product when pre-heated hot in a disposable cup over an extended period of time.

Hot water is needed to prepare a number of food products, for example instant noodles and powdered beverages. Instant noodles are generally packed in plastic cups which are closed by a laminate or aluminium-based lids or foils. To enjoy instant noodles, consumers need to pour hot water into the noodle cup and wait a few minutes to get the noodles ready for consumption. For powdered beverages, it is common for consumers to first boil water separately and then to pour it into a cup containing said powdered beverage. In both cases, the temperature of the hot water is dependent on the settings of the external heater used. This process relies on separate heating of water which requires the availability of an appropriate installation for heating water. Furthermore, hot food products and beverages prepared in such a way tend to slowly cool down in the cup if not consumed readily by the consumer.

It would be desirable for consumers to have an easy-to-use system which would not require to first heat water in a separate appliance or kettle, and which would further help to maintain the temperature of the hot food product in the cup once prepared. For example, instant noodles tend to cool rather quickly once prepared with hot water in a cup. It would therefore be particularly useful for consumers to have a system where the food product could be first prepared in the cup with cold water and then being heated out-of home, for example in an office where mainly office equipment and computers are available, without the need of having access to appliances traditionally only used in kitchens.

There are already solutions available which enable a consumer to prepare a hot food or beverage product e.g. in an office, for example with adding cold water to a food product in a cup and then heating the product within the cup by e.g. connecting an appropriate cup holder and heating equipment with a computer through a Universal Serial Bus (USB) port. For example US2012/0102972 discloses a solution in the form of a stand-alone equipment where a thermally conductive cup can be placed on top of the equipment to be heated with electricity coming from a USB port of a computer. Thereby the food product in the cup can be heated and/or maintained hot for a longer period of time. The cup holder includes a heat conductive liner engaging the bottom and lower portion of the cup and an on/off switch and a polarity switch to select heat or refrigeration. Those systems and thermally conductive cups are relatively expensive and are designed for being used multiple times, after being cleaned each time after use.

Other solutions can be found in the form of heating cups wherein the heating component is integrated in the interior of the heating cup. For example, CN201977418 describes a portable heating cup characterized in that a USB interface is arranged on the shell; the heating disc is connected with the USB interface, a heat filler is arranged between the heating disc and the liner and the cover body is hermetically connected with the shell. Also here, the presented solution is designed for being used multiple times, after being cleaned each time after use.

CN202346141 describes a heat preservation container comprising a cup body, a cup cover and a handle, wherein the cup body is divided into an inner cup body and an outer-cup body, a sealed cavity is formed between the inner cup body and the outer cup body, the sealed cavity is full of heat-conducting fluid, a heating rod is fixed in the sealed cavity. The preservation container is designed for multiple uses.

USB heaters can also be standalone devices which are not integrated in a cup. For example, CN201986189 describes a USB heater where one end of a power line is provided with a USB interface, the other end is connected with an insulating base which is provided with a heating pipe and an indicating lamp, and connection between the base and the heating pipe is waterproof. The heating pipe is then put into a cup with cold content to heat up said content. The system is designed for being used many times.

There is still a need in the art and the food industry to provide more practical and cost effective solutions to heat up and/or maintain a food product hot in a cup, particularly without the need of the consumer to buy and use any other further equipment. Particularly, the solution should provide a direct, single one-time use cup system, which is disposable, easy to handle by the consumer and which is cheap enough that it can be economically produced as a solution for direct packaging of for example dehydrated food or beverage products, which can be reconstituted with cold water by the consumer before heating.

### Summary of the invention

The object of the present invention is to improve the state of the art and to provide a new heating cup for heating food products via USB interface and which overcomes at least some of the inconveniences described above. Particularly, the object of the present invention pertains to a heating cup which is disposable and intended for single use only.

The object of the present invention is achieved by the subject matter of the independent claims. The dependent claims further develop the idea of the present invention.

Accordingly, the present invention provides in a first aspect a disposable heating cup for heating a food product via USB interface characterized in that the heating cup comprises a printed electrical heating circuit and a printed USB connector linked to said electrical heating circuit.

In a second aspect, the present invention relates to a sticker suitable for sticking onto a disposable heating cup for heating a food product, the sticker comprising at least one printed electrical heating circuit and a printed USB connector linked to the at least one electronic heating circuit.

In a third aspect, the invention relates to a packaged food product comprising the disposable heating cup of the present invention.

A still further aspect of the present invention is a method for heating a food or beverage product with making use of a disposable heating cup, where the heating cup comprises at least one printed electrical heating circuit and at least one printed USB connector linked to said electrical heating circuit, and where electricity for heating is provided to said printed electrical heating circuit through said printed USB connector.

The inventors have found that very cheap and still very effective heating cups can be produced when only using a printing technology for applying an electrical heating circuit and its connecting USB connection onto regular, single use disposable paper or plastic cups. For the printing, the inventors used an ink which comprised an electricity conducting material; no other electricity conducting materials such as cables, wires, switches, connectors, metal plates etc. were needed or used for producing those heating cups. Consequently, they can be made very cheaply and at large scale, they are disposable and ideal for applications were a single use is intended.

The inventors have tested and found that the electrical heating circuit can be either printed directly onto a surface of a disposable cup, e.g. an out-side surface or an inside-surface of the cup. Preferably, the printing is on the bottom, i.e. the base, of the cup, either inside or outside of the cup. The inventors have also found that the electrical heating circuit, either with or without the linked USB connector, can be printed onto a sticker, which is of a paper or a laminated plastic material. This sticker, together with its USB connector, can then be attached to a disposable paper or plastic cup, either on the external base, a side wall or on an internal surface of the cup. Furthermore and particularly where a cup comprises a sleeve, the electrical heating circuit and its linked USB connector can also be printed onto such a sleeve, e.g. on the inside surface of said sleeve which is in direct contact with the side wall of the cup. Alternatively, one or several stickers comprising the printed electrical heating circuit can be attached to e.g. the inner surface of such a sleeve.

The inventors have conducted many experiments to validate this invention and have found that an all printed electrical heating circuit on such a disposable paper or plastic cup is absolutely sufficient to heat a single serve amount of water (i.e. of ca. 100 - 300 ml) within a reasonable amount of time (i.e. within 5, 10 or 15 min) or at least to maintain an elevated temperature of a large liquid volume over an extended period of time with as unique source of electricity a USB port of an electronic device. Evidence for this is provided in the Examples section here below.

One of the advantages of the present invention is that it now allows producing and commercialising single-use disposable heating cups, which are for example made of paper or plastic material, which are cheap and can be produced in large quantities. Those cups can be designed and produced in such a way that they are safe for being used for food and beverage applications. Particularly, the present invention now allows to commercialize dehydrated food products such as for example soups, instant noodles, coffee beverages etc. directly provided in such single-serve, single-use cups which then can be re-hydrated by the consumer with cold water and heated via USB connection with a portable computer or other electronic device while he/she is out-of home or in an office.

### Brief Description of Figures

FIG. 1: View of a disposable heating cup
FIG. 2: Inner base heater: electrical circuit and layout
FIG. 3: Outer large base heater: electrical circuit and layout
FIG. 4: Outer base heater: electrical circuit and layout
FIG. 5: Bottom circular sleeve heater: electrical circuit and layout
FIG. 6: Stand-alone performance of silver conductive ink inner base heater: (a) 3 Ohms heater; (b) 5 Ohms heater.
FIG. 7: Stand-alone performance of carbon conductive ink inner base heater: (a) 9.6 Ohms heater; (b) 11 Ohms heater.
FIG. 8: Performance of carbon conductive ink inner base heater with heating cup (USB 2 power source): all 8.5 Ohms; (a) standalone testing outside cup base temperature; (b) empty cup testing inside cup base temperature; (c) cup with 250 ml water, testing outside cup base temperature; (d) cup with 250 ml water, testing inside cup base temperature.
FIG. 9: Performance of silver conductive inner base heater (5 ohms) with heating cup (USB 3 power source): (a) standalone testing outside cup based temperature; (b) empty cup testing inside cup base temperature; (c) cup with 250 ml water, testing outside cup base temperature; (d) cup with 250 ml water, testing inside cup base temperature.
FIG. 10: Performance of silver conductive inner base heater (3 ohms) with heating cup (USB battery power source): all 3 Ohms; (a) standalone testing outside cup based temperature; (b) empty cup testing inside cup base temperature; (c) cup with 250 ml water, testing outside cup base temperature; (d) cup with 250 ml water, testing inside cup base temperature.
FIG. 11: Performance of silver conductive large base heater with heating cup and cup contents for iPad charger application: all set-ups with 300 ml water, same amounts of noodles and seasoning; in addition 500 mg calcium phosphate was added to (b) as dried powder sprinkled, (c) as dissolved, and (e) as dried powder sprinkled.
FIG. 12: Performance of silver conductive dual base heater with heating cup and cup contents: all set-ups with 300 ml water, same amounts of noodles and seasoning; in addition 500 mg calcium phosphate was added to (b) and (d) as dried powder sprinkled.
FIG. 13: Schematic presentation of disposable heating cups of the present invention comprising each a sticker with a printed electrical heating circuit: Fig. 13A comprises a large base heater; Fig. 13B comprises a bottom circular sleeve heater. Legend: a) points to the printed electrical heating circuit; b) points to the strip comprising the USB connector and connector head; c) points to the printed USB connector head.
FIG. 14: Schematic presentation of sleeves for a disposable heating cup of the present invention comprising each a printed electrical heating circuit. Fig. 14A illustrates an application with the use of the design of an outer base heater; Fig. 14B illustrates a solution where the electrical heating circuit is printed directly onto the inside surface of a sleeve. Legend: a) points to the printed electrical heating circuit; b) points to the strip comprising the USB connector and connector head; c) points to the printed USB connector head; and d) points to the pre-cut tearing line.

### Detailed Description of the invention

The present invention pertains in a first aspect to a disposable heating cup for heating a food product via USB interface characterized in that the heating cup comprises a printed electrical heating circuit and a printed USB connector linked to said electrical heating circuit. The disposable heating cup comprises at least one printed electrical heating circuit and at least one printed USB connector linked to said one electrical heating circuit.

"Disposable heating cup" of the present invention means that the heating cup can be disposed of after use. Hence, 'disposable' is herein meant as being equivalent to 'intended for single use'. Consequently, a disposable heating cup has to correctly function at least only for the first time. It is a quick, simple, hygienic and easy-to-use solution for a consumer. It does not require cleaning or washing of the heating cup after use, as it is intended for being disposed of after its first use.

The disposable heating cup can be sized to accommodate a variety of volumes depending on user and design requirements. The heating cup can for example accommodate about 100 ml, or 150 ml, and up to about 350 ml or about 500 ml in volume.

"Via USB interface" means that the electric power for the printed electrical heating circuit to heat up is provided via a direct connection to a Universal Serial Bus (USB) port from an electronic device such as a computer, network adapter, a separate power charger or any other similar device.

"Printing" herein refers to a process of reproducing an image using a master form or a template. Typically, printing is done with using an ink or ink-like substance. Suitable printing techniques as for the present invention are selected from the group consisting of screen printing, digital printing, inkjet printing, laser printing, off-set printing and transfer printing.

In a separate embodiment, the disposable heating cup of the present invention comprises two or more printed electrical heating circuits, all linked to one printed USB connector. The advantage of having two or more printed electrical heating circuits per cup is that the heating profile for a food or beverage product can be optimized, for example to heat up a product faster and more uniform. The number of printed electronic heating circuits in the cup also depends on the size and scope of the heating cup and also on further user and design requirements.

In one embodiment, the heating cup of the present invention comprises a sleeve, and wherein the electrical heating circuit is printed onto the inner side of said sleeve. This embodiment has several advantages as it allows for example to print the electrical heating circuit onto a flat surface i.e. the sleeve before it is wrapped around the heating cup. Furthermore, printing the heating circuit on the inner side of the sleeve brings it into close contact with the side wall of the heating cup, once wrapped around the cup, and thereby assures a best possible heat transfer from the sleeve to the cup. Still further, having it printed on the inner side of the sleeve helps that a consumer holding the cup does not easily burn his fingers.

In a further embodiment, the heating cup of the present invention comprises a sticker and wherein the electrical heating circuit is printed onto the sticker. Thereby, the electronic heating circuit can be printed directly onto the non-adhesive surface side of a sticker. The advantage of using a sticker for providing an electrical heating circuit to a disposable cup is that it is much easier to print such a circuit onto a flat surface of a sticker which is only thereafter attached to a round or un-regular surface of a heating cup. Furthermore, the solution of using a sticker allows including also the printing of the USB connector linked to said electrical heating circuit directly onto the same sticker. Thereby, for example the part of the sticker comprising the USB connector is not attached to the heating cup and allows free connection to a USB port of an electronic device.

The sticker with the printed electronic heating circuit can be attached onto the exterior surface of a heating cup, such as a side wall of the heating cup, the base of the heating cup or to the internal side of a sleeve surrounding the heating cup. The sticker can be attached to the cup by any suitable adhesion technique. Preferably, the part of the sticker which comprises the printed USB connector with the USB connector head is not firmly attached to the cup in order to enable the consumer to detach this part from the cup and to plug it into a USB port of one of his electronic devices.

The sticker does not have to cover an entire exterior or interior surface of a heating cup. The extent of overlap of the sticker and the surface of the cup is designed in accordance with the amount of liquid that the cup can handle, the rate at which the liquid needs to be warmed, and the power supply specifications for heating up the heating circuit.

The sticker may further include an adhesive layer arranged between the surface of the heating cup and e.g. the plastic laminate where the heating circuit is printed on. Preferably, the adhesive layer may include a material selected from the group consisting of heat curing adhesive layers, UV curing adhesive layers, and pressure sensitive adhesive layers.

In a further embodiment, the present invention relates to a disposable heating cup, wherein the electrical heating circuit is printed directly onto a surface of the heating cup. The surface of the heating cup can be the side wall, either inner side or external side, or the base of the heating cup.

Preferably, the printing of the electrical heating circuit is at a location which is usually not touched by a consumer, for example the base of the heating cup, either internal or external of the cup, or at a lower part of the internal side wall of the heating cup. It is expected that a direct printing of an electrical heating circuit allows the best and immediate heat transfer from the circuit to the cup and to its content.

In one embodiment, the electrical heating circuit and the USB connector are printed with an electricity conducting material. Preferably, the electricity conducting material is blended with and comprises an ink, a solvent and/or a varnish. In a preferred embodiment, the electricity conducting material is selected from the group consisting of silver-based conductive ink, copper-based conductive ink, conductive polymer ink, and carbon-based resistive ink. Before printing, the electricity conducting material can be in the form of a liquid, a powder or a wax.

The printed electronic heating circuit may be designed in the form of a meander design, a serpentine design, a spiral design or a combination thereof. The printed electronic heating circuit may include any further suitable designs as long as the circuit can generate sufficient heat to warm up the cup. The printed electronic heating circuit may be arranged in series, in parallel, or in a combination of both series and parallel depending on user and design requirements.

The design of the printed electronic heating circuit may include printed lines having a thickness (t) of about 10 µm to 80 µm, preferably about 20 µm to 70 µm. A complete printed heating circuit design may have a width of about 100 to 2000 µm, preferably of about 50 µm to 2000 µm. The heating circuit may also include a length (referring to the length from the start of one terminal end to the other terminal end) of about 1000 mm to 4000 mm, preferably of about 1500 mm to 2500 mm.

The printed electronic heating circuit can have a resistance of 0.025 Ω/cm² to 0.15 Ω/cm², and preferably of about 0.05 Ω/cm². The power density applied to the printed electronic heating circuit can be between 0.1 W/cm² to 0.3 W/cm², preferably about 0.25 W/cm² for example.

In one embodiment, the USB connector of the disposable heating cup of the present invention is printed onto a strip which is detachable from the heating cup at the one end which comprises a USB connector head. The electrical power is provided to the electrical heating circuit or circuits through the printed USB connector that is detachable from the heating cup at the one end which comprises a USB connector head, and the USB connector head being able to be connected to a power supply via an USB plug. The printed USB connector head is printed and configured to easily be mechanically engaged with and electrically connected to a standard USB plug.

The USB plug can be a standard-A or -B plug. For example, it can be a USB 2.0 (normally supplying 5V at maximum output current of 500 mA), USB 3.0 (normally supplying 5V at maximum output current of 900 mA) or a USB portable charger (normally supplying 5V at 1.0 - 2.1 A) such as e.g. an iPad charger.

The printed USB connector can be printed for example on a PET laminate, a paper laminate or cardboard. For example, this printed USB connector can then further be stuck onto or be part of a cardboard sleeve that has a pre-cut shaped part which is supporting the printed USB connector of the printed electronic heating circuit. The sleeve may be perforated in such a way that allows the easy detaching of the strip comprising the USB connector.

The printed electronic heating circuit is activated in a relatively fast manner, as soon as the USB connector has been inserted at its end one end comprising the connector head into a USB power source. Thereby, preferably, the power supply is attached to the end of the printed electronic heating circuit by detaching a part of the cardboard sleeve onto the end connection point of the heater, and plugging it into a suitable USB power source, such as a laptop for example.

The heating cup of the present invention is preferably made of a plastic or a paper material, such as for example a plastic laminate or a paper laminate, or a combination thereof. The materials include PVC, polyolefin, and regular paper. The heating cup is made of a material which can support and maintain a liquid, hot food product for a certain period of time, the time necessary for a normal, regular consumption of such a food or beverage product. There are no complicated set-up procedures or additional warming equipment needed.

The sticker whereon the printed electronic heating circuit is incorporated may be made of any suitable paper material or plastic laminate, including polyethylene terephthalate (PET) and polyethylene naphthalate (PEN) substrates, for example. The substrate may be of a relatively rigid material so as to act as a base for subsequent deposition of materials. Preferably, the sticker is made of PET laminate.

In one embodiment, the heating cup of the present invention does not comprise an electrical cable or wire. A "wire" as of the present invention means a slender, flexible strand or rod of metal. A "cable" of the present invention consists of several slender, flexible metal strands twisted together. Electrical wires and cables are typically made of copper.

There are several advantages of not having an electrical cable or wire comprised with the heating cup. For example, the heating cup can be produced much more cheaply by not using and integrating an electrical wire and consequently heating cups which are truly disposable can be produced at a large scale. The heating cups are more environmental friendly as no metal parts are present with the disposable heating cup. Furthermore, as no metal parts are present in the cups, they are also safer to be used by consumers, representing a much lower risk of injuries when handling the heating cups.

In a second aspect, the present invention relates to a sticker suitable for sticking onto a disposable heating cup for heating a food product, the sticker comprising at least one printed electrical heating circuit and a printed USB connector linked to the at least one electronic heating circuit. Preferably, the sticker is made of a plastic or a paper material, or a combination thereof. Most preferably, the sticker is made of a PET laminate.

In a third aspect, the invention relates to a packaged food product comprising the disposable heating cup of the present invention. Preferably, the packaged food product of the present invention is a soup, for example an instant soup, an instant noodle or other pasta product, a coffee product, a tea product, a milk drink product or a chocolate drink product.

A still further aspect of the present invention is a method for heating a food or beverage product with making use of a disposable heating cup, where the heating cup comprises at least one printed electrical heating circuit and at least one printed USB connector linked to said electrical heating circuit, and where electricity for heating is provided to said printed electrical heating circuit through said printed USB connector. Preferably, the disposable heating cup does not comprise any solid metal parts. Preferably, the disposable heating cup does not comprise any electrical metal wires or cables.

The packaged food product comprising the disposable heating cup of the present invention can be used by a consumer in the following way:
- pour ambient temperature water into the cup comprising e.g. a dehydrated food product;
- detach the pre-cut part of the cardboard sleeve comprising the printed USB connector;
- connect the end of the solid board sleeve with the printed USB connector head to a laptop USB slot;
- heat the water and the food product contained in the cup within 5 to 20 minutes via the electricity provided through the USB connection.

Those skilled in the art will understand that they can freely combine all features of the present invention disclosed herein. In particular, features described for the product of the present invention may be combined with the method of the present invention and vice versa. Further, features described for different embodiments of the present invention may be combined. Further advantages and features of the present invention are apparent from the Figures and examples.

### Example 1: Design and fabrication of heating cups with various circular and base heaters

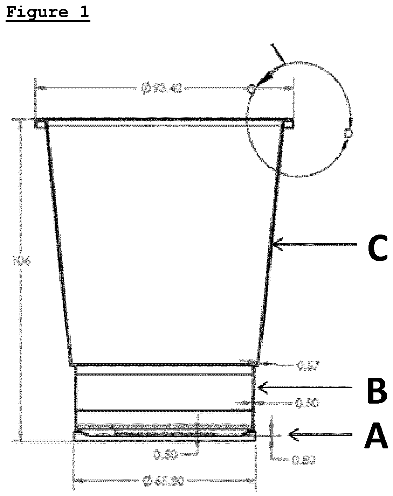

A disposable cup as it is presently available on the Market and commercialized as a packaged food product comprising dehydrated instant noodles to be prepared by adding hot water, and intended for single-use and single-serve is shown in Figure 1. The locations where different printed electrical heating circuits have been attached and tested for heating in the present examples are indicated as A for base heater, B for bottom circular sleeve and C for top circular sleeve. Two samples of such packaged noodle cups were measured to determine the weight of content, the amount of water required and the total weight of the content to be heated (Table 1).

**TABLE 1: Heating cup specifications for instant Noodles**

| Sample | Cup noodle weight w/o water | Noodle weight | Seasoning packet weight | Disposable fork weight | Cup weight | Water content without noodle | Water content with noodle | Total weight of cup noodle with water |
|---|---|---|---|---|---|---|---|---|
| | (gm) | (gm) | (gm) | (gm) | (gm) | (ml) | (ml) | (gm) |
| Cup 1 | 83 | 52 | 6.5 | 2 | 21.5 | 340 | 280 | 376 |
| Cup 2 | 79 | 49 | 6.5 | 2 | 21.5 | 340 | 280 | 375 |

Based on the physical dimensions of the noodle cup, effective heating surface areas for the various parts of the cup were determined and the dimensions are indicated in Table 2. Specifications of different power sources to be used for the heating process are specified in Table 3. Various factors affecting the heating performance of the printed flexible heater film are specified in Table 4. Circular and base heaters for the disposable heating cup were designed based on these parameters.

**TABLE 2: Dimensions of various heating areas in the cup**

| **Location** | **Radius (cm)** | **Surface Area (cm²)** | **Heater Denotation** |
|---|---|---|---|
| **A:** Inner base area | 1.65 | 8.04 | Inner base heater |
| **A:** Outer base area (small centre part) | 0.92 | 2.65 | Outer base heater |
| **A:** Outer base area (large full base) | 2.44 | 18.85 | Outer large base heater |
| **A:** Inner & outer centre base | | 9.9 | Dual base heater |
| **B:** Bottom circular sleeve area | | 34 | Bottom circular heater |
| **C:** Top circular sleeve area | | 208 | Top circular heater |

**TABLE 3: Different available USB power sources**

| Source | Supply Voltage (volts) | Supply Current (A) | Power (watts) |
|---|---|---|---|
| PCB USB 2 | 5 | 0.5 | 2.5 |
| PCB USB 3 | 5 | 0.9 | 4.5 |
| iPhone charger | 5 | 1.0 | 5 |
| iPad charger//USB Charger | 5.1 | 2.1 | 10.7 |

**TABLE 4:**

| **Index** | **Description** | **Value** |
|---|---|---|
| 1 | Effective heater size | 8-34 cm² |
| 2 | Resistance range ± tolerance | 2-10 Ω |
| 3 | Material of object to be heated | Water, noodle, seasoning |
| 4 | Weight of object to be heated | 373-400 gm |
| 5 | Specific heat capacity of the material to be heated up | 1700-4200 J/kg°C |
| 6 | Required time duration to reach desired temperature | 20 min |
| 7 | Power | 2.5-10 watts |

For the 1^{st} phase, the inner base area was selected as it was the most appropriate location for flexible printed heater attachment as it is not in contact with the consumer's fingers. Heater resistances in the range of 2 to 10 ohms were designed and fabricated on 125 µm and 50 µm thick PET films using silver and carbon conductive inks. Outer large base area, dual inner and outer base, and bottom circular sleeve areas were selected as heating areas for 2^{nd} phase of the experiments. The material properties of both silver and carbon conductive inks as defined in Table 6 and Table 7 were tested as well. The heaters were printed directly on the PET films using screen printing technology.

**TABLE 6: Silver conductive paste properties**

| **Description** | **Characteristics** | **Remarks** |
|---|---|---|
| Silver conductive paste | Polymer type silver paste | High conductivity and flexibility |
| Viscosity | 200-300 ps at 25°C | |
| Solid content | 70-80 wt.% | |
| Curing condition | 150°C for 20 minutes | |
| Sheet resistivity | Below 40 mΩ/cm² | At 10 µm thickness |
| Volume resistivity | 4 x 10⁵ Ω-cm | |

**TABLE 7: Carbon conductive paste properties**

| **Description** | **Characteristics** | **Remarks** |
|---|---|---|
| Carbon conductive paste | Silver carbon hybrid paste | Excellent flexibility |
| Viscosity | 200-300 ps at 25°C | |
| Curing condition | 150°C for 2 minutes | |
| Sheet resistivity | 80 mΩ/cm² | At 10 µm thickness |

### Phase 1: Printed Inner Base Heater

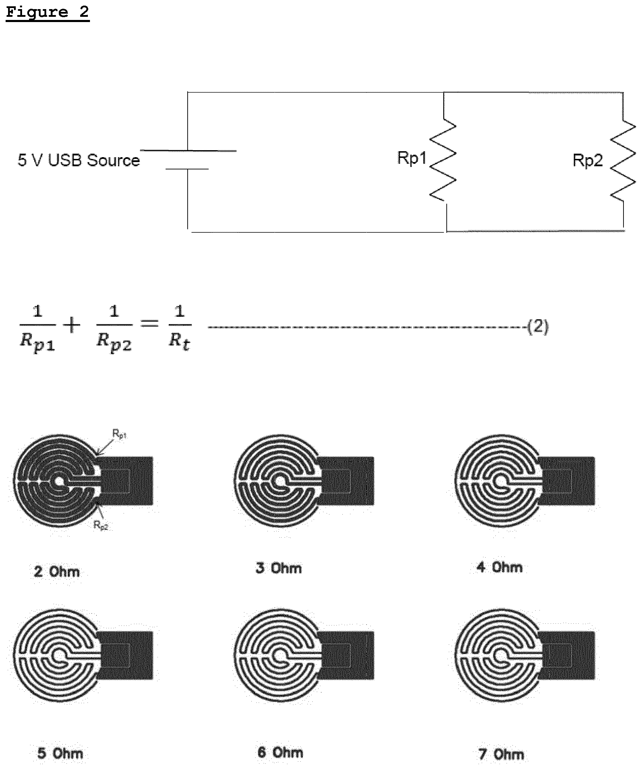

Resistances between 2 to 10 ohms were designed to meet both USB 2 and USB 3 requirements. Each base heater consists of 2 parallel resistors and its equivalent circuit is shown and described in Fig. 2. The total resistance can be calculated by using the equation as indicated in the Figure. The layouts of various inner base heaters are shown in Figure as well. The design parameters obtained are indicated in Table 8.

**TABLE 8: Design parameters for inner base heaters**

| Description | Trace Width | Rₚ₁ Trace Length | Rₚ₂ Trace Length | Configuration |
|---|---|---|---|---|
| | (mm) | (mm) | (mm) | |
| Heater 1 | 1.5 | 187.6 | 172.6 | Parallel resistor configuration |
| Heater 2 | 1 | 187.6 | 172.6 | Parallel resistor configuration |
| Heater 3 | 0.75 | 187.6 | 172.6 | Parallel resistor configuration |
| Heater 4 | 0.60 | 187.6 | 172.6 | Parallel resistor configuration |
| Heater 5 | 0.46 | 187.6 | 172.6 | Parallel resistor configuration |
| Heater 6 | 0.43 | 187.6 | 172.6 | Parallel resistor configuration |

### Phase 2: Printed Heaters

In phase 2, different types of heaters were designed as follows:
- Outer Large base heater
- Dual base heater
- Bottom circular sleeve heater

For the above heaters, resistances between 2 to 7 Ω were designed to meet both USB 3 and iPad charger requirements.

### Large base heater

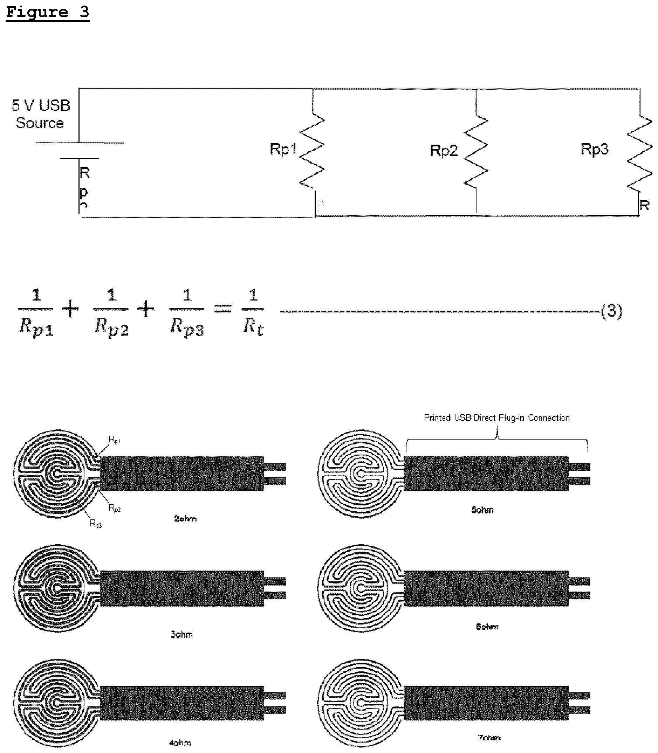

For outer large base area heaters, each heater consisted of 3 parallel resistors and USB power supply interconnects were also printed to enable direct plug-in to the USB source. The equivalent circuit is shown in Fig. 3, and the total resistance can be calculated using the indicated equation. The layout of the outer large base heaters is presented in Fig. 3 as well. The design parameters as determined are shown in Table 9 and the USB trace parameters are described in Table 10.

**TABLE 9: Design parameters for large base heater**

| Description | Rₚ₁ Trace Width | Rₚ₂ Trace Width | Rₚ₃ Trace Width | Rₚ₁ Trace Length | Rₚ₂ Trace Length | Rₚ₃ Trace Length | Total Heater Area | Configuration |
|---|---|---|---|---|---|---|---|---|
| | (mm) | (mm) | (mm) | (mm) | (mm) | (mm) | (cm²) | |
| Heater 1 | 1.02 | 1 | 0.96 | 245 | 240 | 231 | 18.85 | Parallel resistor configuration |
| Heater 2 | 0.68 | 0.67 | 0.64 | 245 | 240 | 231 | 18.85 | Parallel resistor configuration |
| Heater 3 | 0.51 | 0.5 | 0.48 | 245 | 240 | 231 | 18.85 | Parallel resistor configuration |
| Heater 4 | 0.41 | 0.4 | 0.39 | 245 | 240 | 231 | 18.85 | Parallel resistor configuration |
| Heater 5 | 0.34 | 0.33 | 0.32 | 245 | 240 | 231 | 18.85 | Parallel resistor configuration |
| Heater 6 | 0.29 | 0.28 | 0.28 | 245 | 240 | 231 | 18.85 | Parallel resistor configuration |

**TABLE 10: USB interconnection specifications**

| Description | USB Trace Width (mm) | USB Trace Length (mm) |
|---|---|---|
| USB Connection | 10 | 100 |

### Dual Base heater

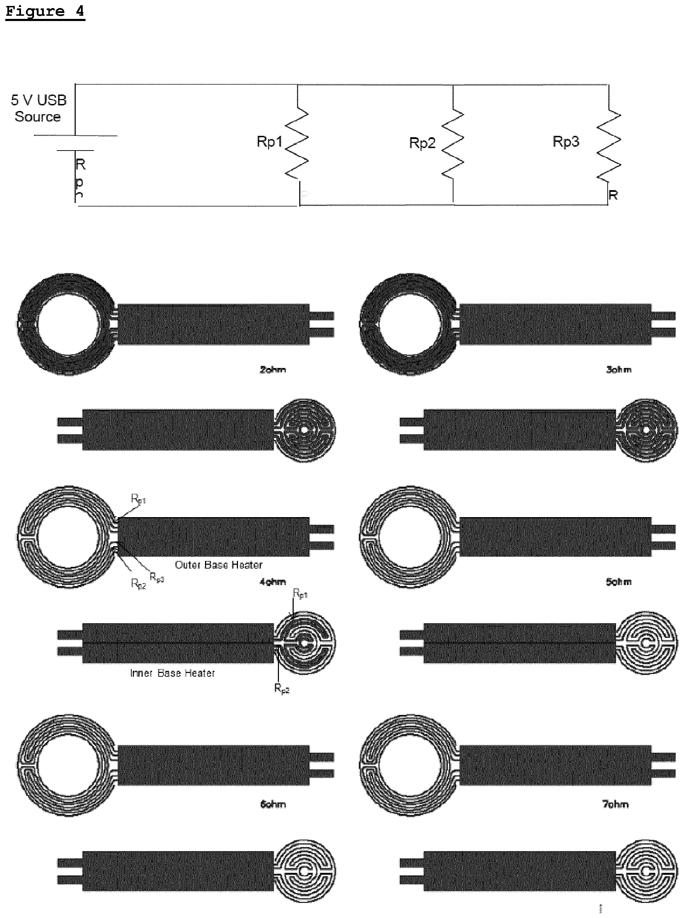

The dual base heater consists of 2 separate heaters: inner and outer base heaters. Each heater requires an independent USB power source which results in an increased energy density per surface area. The inner base heater comprises 2 parallel resistors and its equivalent circuit is shown in Fig. 2. The outer base heater is formed by combining 3 resistors in parallel configuration as indicated in Fig. 4. Detailed design parameters for both inner and outer base heaters have been determined and are presented in Tables 11 and 12, respectively.

**TABLE 11: Design parameters for inner base heater**

| Description | Rₚ₁ Trace Width | Rₚ₂ Trace Width | Rₚ₁ Trace Length | Rₚ₂ Trace Length | Total Heater Area | Configuration |
|---|---|---|---|---|---|---|
| | (mm) | (mm) | (mm) | (mm) | (cm²) | |
| Heater 1 | 1.13 | 1.19 | 181 | 190.8 | 7.25 | Parallel resistor configuration |
| Heater 2 | 0.75 | 0.8 | 245 | 181 | 7.25 | Parallel resistor configuration |
| Heater 3 | 0.56 | 0.6 | 245 | 181 | 7.25 | Parallel resistor configuration |
| Heater 4 | 0.45 | 0.48 | 245 | 181 | 7.25 | Parallel resistor configuration |
| Heater 5 | 0.38 | 0.4 | 245 | 181 | 7.25 | Parallel resistor configuration |
| Heater 6 | 0.32 | 0.34 | 245 | 181 | 7.25 | Parallel resistor configuration |

**TABLE 12: Design parameters for outer base heater**

| Description | Rₚ₁ Trace Width | Rₚ₂ Trace Width | Rₚ₃ Trace Width | Rₚ₁ Trace Length | Rₚ₂ Length | Rₚ₃ Trace Length | Total Heater Area | Configuration |
|---|---|---|---|---|---|---|---|---|
| | (mm) | (mm) | (mm) | (mm) | (mm) | (mm) | (cm²) | |
| Heater 1 | 1.12 | 1.1 | 1.08 | 268 | 262 | 259.7 | 2.65 | Parallel resistor configuration |
| Heater 2 | 0.74 | 0.73 | 0.72 | 245 | 262 | 259.7 | 2.65 | Parallel resistor configuration |
| Heater 3 | 0.56 | 0.55 | 0.54 | 245 | 262 | 259.7 | 2.65 | Parallel resistor configuration |
| Heater 4 | 0.45 | 0.44 | 0.43 | 245 | 262 | 259.7 | 2.65 | Parallel resistor configuration |
| Heater 5 | 0.37 | 0.36 | 0.36 | 245 | 262 | 259.7 | 2.65 | Parallel resistor configuration |
| Heater 6 | 0.32 | 0.31 | 0.31 | 245 | 262 | 259.7 | 2.65 | Parallel resistor configuration |

### Bottom Circular Sleeve Heater

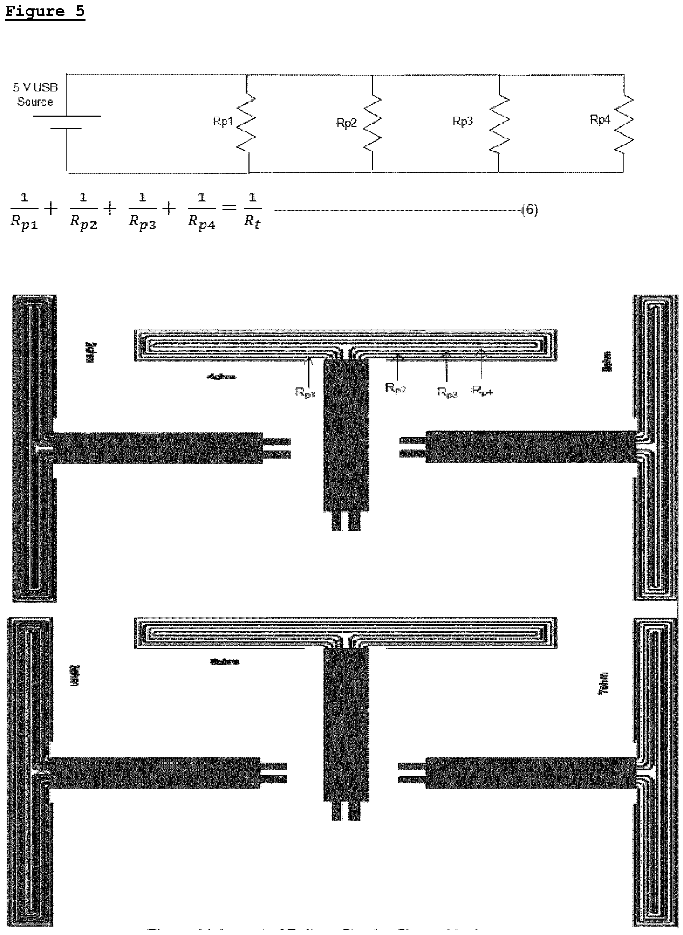

This printed heater is meant to be wrapped around the bottom lower area of the cup. It is a combination of 4 parallel resistors and its equivalent circuit is shown in Fig. 5. Its total resistance can be determined by using equation indicated in the Figure. The layout of the bottom circular sleeve heater is also shown in the Figure. The design parameters were determined and are presented in Table 13. The total heater area is approximately 34 cm² and this heater has the largest heating surface area tested.

**TABLE 13: Design parameters for bottom circular sleeve heater**

| Description | Rₚ₁ Trace Width | Rₚ₂ Trace Width | Rₚ₃ Trace Width | Rₚ₄ Trace Width | Rₚ₁ Trace Length | Rₚ₂ Trace Length | Rₚ₃ Trace Length | Rₚ₄ Trace Length | Total Heater Area |
|---|---|---|---|---|---|---|---|---|---|
| | (mm) | (mm) | (mm) | (mm) | (mm) | (mm) | (mm) | (mm) | (cm²) |
| Heater 1 | 1.28 | 1.26 | 1.23 | 1.2 | 411 | 402 | 393 | 384 | 34 |
| heater 2 | 0.86 | 0.84 | 0.82 | 0.8 | 411 | 402 | 393 | 384 | 34 |
| Heater 3 | 0.64 | 0.63 | 0.61 | 0.6 | 411 | 402 | 393 | 384 | 34 |
| Heater 4 | 0.51 | 0.5 | 0.49 | 0.48 | 411 | 402 | 393 | 384 | 34 |
| Heater 5 | 0.43 | 0.42 | 0.41 | 0.40 | 411 | 402 | 393 | 384 | 34 |
| Heater 6 | 0.37 | 0.36 | 0.35 | 0.34 | 411 | 402 | 393 | 384 | 34 |

### Example 2: Analysis and evaluation of heating performance of the heating cups having circular and base heaters

### Phase 1

Two different heaters fabricated with carbon conductive ink were selected to meet USB 2 requirements whereas for USB 3 and USB Portable battery applications, two heaters composed of silver conductive ink were selected for evaluation. For each test, all test conditions and configurations also external to the heating cup such as cable length, thermocouple attachment location, type of thermocouple, thermocouple wire length of different mess stations were kept identical to keep the variations at a strict minimum.

### Stand-alone Performance of Inner Base Heaters

Stand-alone performances of these heaters were evaluated by measuring temperature as a function of applied respective USB voltage at initial room temperature. Temperature profile of each heater was recorded with a data logger by attaching thermocouples to the centre of the heater surface. In addition, a digital oscilloscope was used to monitor the source voltage and supply current to ensure that both parameters remain constant throughout the testing duration. Precautions were taken to minimize heat loss from the surface to the surroundings. The summary of heater performance with respect to final temperature, power consumption and energy density of each heater is presented in Table 14. As a result, the rate of conversion from electrical energy into heat energy is dependent upon 3 factors namely current, load resistance and the potential difference across the load. Fabricated inner base heaters using silver conductive paste and carbon conductive paste were according to Figure 2.

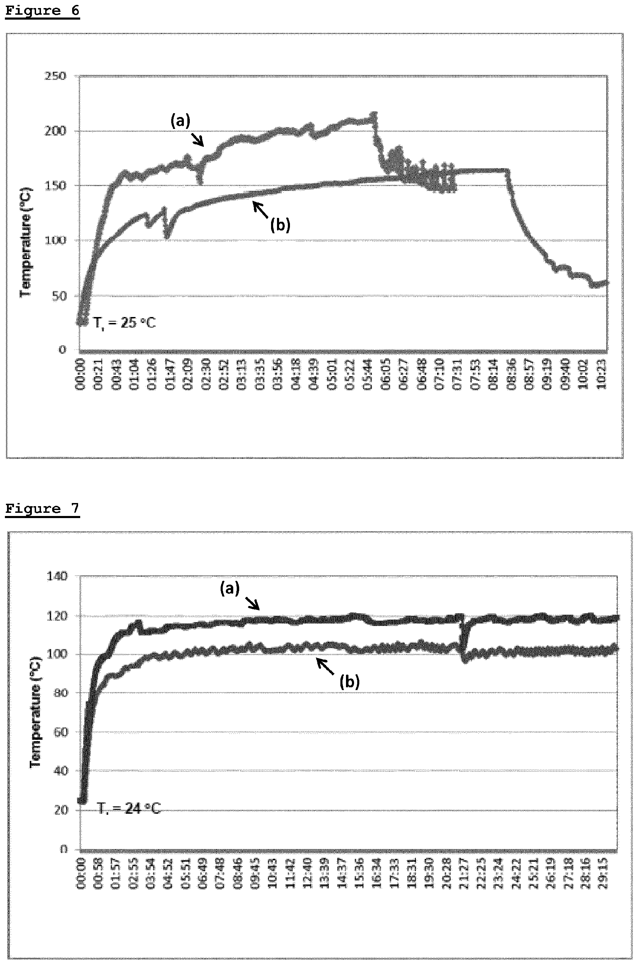

It can be clearly seen that 3 Ω heater printed with silver conductive paste which was powered by USB portable battery is able to reach 217 °C within 6 minutes as it has the lowest load resistance and maximum current of 1420 mA among the heaters. Heaters driven by USB 2 and 3 sources were able to reach maximum temperature of 120 °C and 165 °C respectively within 120 minutes. Thermal profile of both silver and carbon conductive heaters are presented in Fig. 6 and 7, respectively.

**TABLE 14: Inner base heater stand-alone performance summary**

| Source | Heater Type | Temperature | | USB Voltage | Resistance | Current | Power Consumption | Energy Density |
|---|---|---|---|---|---|---|---|---|
| | | Tᵢ: Initial | T_{f}: Final | | | | | |
| | | (°C) | (°C) | (V) | (Ω) | (mA) | (Watts) | (watt/cm²) |
| USB 2 | Carbon Conductive Ink | 24.44 | 120.00 | 5.12 | 9.63 | 512.00 | 2.62 | 0.33 |
| USB 2 | Carbon Conductive Ink | 24.03 | 106.30 | 5.28 | 11.01 | 464.00 | 2.45 | 0.30 |
| USB 3 | Silver Conductive Ink | 28.29 | 163.53 | 5.12 | 5.18 | 880.00 | 4.51 | 0.56 |
| USB Battery | Silver Conductive | 24.66 | 217.29 | 4.96 | 3.05 | 1420.0 | 7.04 | 0.88 |

### Performance of Inner Base Heaters with Noodle Cup

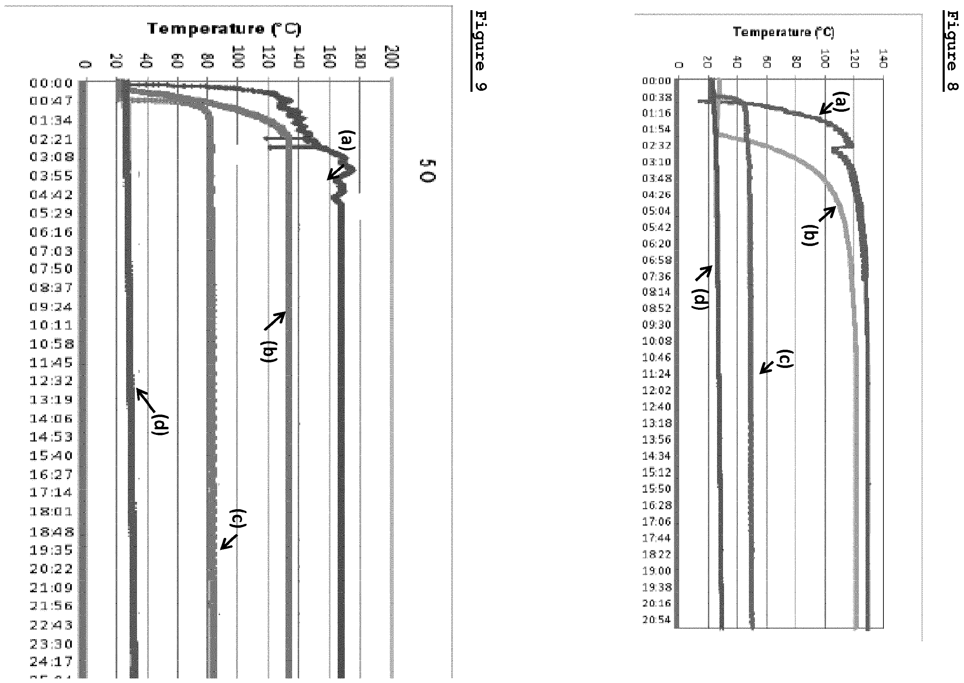

Two different test set ups were used to determine the highest temperatures that can be achieved. In test set up 1, a printed inner base heater was placed at the inside bottom of an empty noodle cup. Thermocouples were attached to the opposite outside surface of the heater and the bottom of the cup to determine the amount of thermal energy being transferred through the base of the noodle cup. 250 ml of water was added to the noodle cup for the second test set up in order to measure the temperature of the water. Thermocouple placements were identical to the test set up 1. For test set up 1 with a USB 2 source and with a carbon conductive inner base heater, the highest temperature of 121 °C was reached inside the cup base. Using silver conductive inner base heaters for USB 3 and USB battery, 131 °C and 143 °C maximum temperatures were obtained respectively under 10 minutes. For test set up 2, which consisted of 250 ml of water inside the cup, carbon conductive inner base heater with USB 2 source was able to reach 30 °C within 20 minutes. Highest temperatures of 31 °C and 38 °C were achieved within 20 minutes for silver conductive inner base heaters using USB 3 and iPad/USB charger sources. The performance summary of the 2 test set-ups is presented in Table 15 and temperature profiles of each test set-up are shown in Fig. 8, 9 and 10, respectively.

**TABLE 15: Inner base heater performance summary with water**

| Source | Heater Type | Mass of Cup Content | Temperature | | | USB Voltage | Resistance | Current | Power Consumption | Energy Density |
|---|---|---|---|---|---|---|---|---|---|---|
| | | | Tᵢ: Initial | T_{fo}: Final outside cup base | T_{fi}: Final inside cup base | | | | | |
| | | (ml) | (°C) | (°C) | (°C) | (V) | (Ω) | (mA) | (Watts) | (watt/cm²) |
| USB 2 | Carbon Conductive Ink | 0 | 22.50 | 129.00 | | 5.27 | 8.45 | 583.00 | 3.07 | 0.38 |
| USB 2 | Carbon Conductive Ink | 0 | 27.00 | 126.00 | 121.00 | 5.25 | 7.32 | 631.00 | 3.31 | 0.41 |
| USB 2 | Carbon Conductive Ink | 250 | 23.00 | 50.00 | 30.00 | 5.17 | 6.18 | 776.00 | 4.01 | 0.50 |
| USB 3 | Silver Conductive Ink | 0 | 22.3 | 174 | | 5.28 | 5.09 | 813.00 | 4.29 | 0.53 |
| USB 3 | Silver Conductive Ink | 0 | 23.0 | 166 | 133 | 5.25 | 5.05 | 910.00 | 4.78 | 0.59 |
| USB 3 | Silver Conducive Ink | 250 | 25.9 | 83 | 31 | 5.18 | 4.24 | 1080 | 5.59 | 0.70 |
| USB Battery | Silver Conductive Ink | 0 | 24.03 | 216 | | 5.11 | 3.19 | 1490 | 7.61 | 0.95 |
| USB Battery | Silver Conductive Ink | 0 | 22.30 | 209 | 143 | 5.14 | 3.42 | 1410 | 7.25 | 0.90 |
| USB Battery | Silver Conductive Ink | 250 | 25.4 | 116 | 38 | 5.13 | 3.04 | 1480 | 7.59 | 0.94 |

### Additional Testing of Inner Base Heaters with Noodle Cup and Paper Cup

Based on preliminary testing results, 2 additional tests were carried out. Heater placement and thermocouple locations were identical to the previous test set-up. USB 3 and USB battery sources were used for the further testing. For the 1^{st} test, silver conductive inner base heaters with resistance of 5 Ω, 3 Ω and 2 Ω were tested for different configurations and the performance summary is shown in Table 16. Highest temperature of 35 °C was obtained with 2 Ω heater using USB battery source to heat up 250 ml of water at room temperature.

Test configurations for 2^{nd} additional test are shown in Table 17. Both Plastic Cup and Paper Cup with different mass of water at various temperatures were tested to study the feasibility of warming applications. Only USB 3 source was used for the testing with the 5 Ω inner base heater. A water mass of 250 ml at room temperature and at 80 °C using plastic cups were tested with 5 Ω heater and temperatures of 33 °C and 64 °C, respectively, were maintained for at least 30 minutes. Similar tests were carried out with paper cups using 50 ml of water at room temperature and 80 °C. The water temperatures of 42 °C and 72 °C were maintained up to 20 minutes. Test results are shown in Table 18.

**TABLE 16: Inner base heater performance summary using heating cup with water**

| Source | Heater Type | Mass of cup content (ml) | Temperature | | | USB voltage (V) | Resistance (Ω) | Current (mA) | Power Consumption (Watts) | Energy Density (Watt/cm²) |
|---|---|---|---|---|---|---|---|---|---|---|
| | | | Tᵢ: initial (°C) | T_{fo}: final outside cup base (°C) | T_{fi}: final inside cup base (°C) | | | | | |
| USB 3 using paper cup | Silver conductive ink | 0 | 24 | 157 | 76 | 5.04 | 5.29 | 807 | 4.07 | 0.51 |
| USB 3 using paper cup with 50 ml water | Silver conductive ink | 50 | 24 | 83 | 42 | 4.97 | 5.29 | 985 | 4.90 | 0.61 |
| USB battery using plastic noodle cup | Silver conductive ink | 0 | 24 | 230 | 183 | 4.81 | 3.36 | 1160 | 5.58 | 0.69 |
| USB battery using plastic noodle cup with 50 ml water | Silver conductive ink | 50 | 24 | 83 | 40 | 4.95 | 3.37 | 1280 | 6.34 | 0.79 |
| USB battery using plastic noodle cup with 250 ml water | Silver conductive ink | 250 | 24 | 107 | 34 | 4.75 | 2.04 | 1900 | 9.03 | 1.12 |
| USB battery using plastic noodle cup with 250 ml water | Silver conductive ink | 250 | 26 | 73 | 35 | 4.76 | 2.02 | 1920 | 9.14 | 1.14 |

**TABLE 17: Inner base heater performance using paper heating cup and plastic heating cup**

| Source | Cup Type | Water content (ml) | Water Temperature (°C) | Presence of heater | Heater location | Expected result |
|---|---|---|---|---|---|---|
| USB 3 | Plastic noodle cup | 250 | Room temperature | Yes | Inside the cup | Temperature profile |
| USB 3 | Plastic noodle cup | 250 | 80 | No | Outside the cup | Temperature profile |
| USB 3 | Plastic noodle cup | 250 | 80 | Yes | Outside the cup | Temperature profile |
| USB 3 | Paper cup | 50 | Room temperature | Yes | Inside the cup | Temperature profile |
| USB 3 | Paper cup | 50 | 80 | No | Outside the cup | Temperature profile |
| USB 3 | Paper cup | 50 | 80 | Yes | Outside the cup | Temperature profile |

**TABLE 18: Inner base heater performance using paper heating cup and plastic heating cup**

| Source | Heater Type | Mass of cup content (ml) | Heater location | Temperature | | | USB voltage (V) | Resistance (Ω) | Current (mA) | Power Consumption (Watts) | Energy Density (Watt/cm²) |
|---|---|---|---|---|---|---|---|---|---|---|---|
| | | | | Tᵢ: initial (°C) | T_{fo}: final outside cup base (°C) | T_{fi}: final inside cup base (°C) | | | | | |
| USB Battery using plastic noodle cup | Silver conductive ink | 250 @ Room temp. | Heater inside the cup | 26 | | 33 | 5.17 | 4.60 | 1250 | 6.46 | 0.81 |
| USB 3 using plastic noodle cup | Silver conductive ink | 250 @ 80°C | No heater | 84 | 51 | 58 | | 4.86 | | | |
| USB 3 using plastic noodle cup | Silver conductive ink | 250 @ 80°C | Heater inside the cup | 79 | 104 | 64 | 5.28 | 4.86 | 999 | 5.27 | 0.66 |
| USB 3 using paper cup | Silver conductive ink | 50 @ Room temp. | Heater inside the cup | 26 | | 42 | 5.12 | 4.45 | 1090 | 5.58 | 0.69 |
| USB 3 using paper cup | Silver conductive ink | 50 @ 80°C | No heater | 71 | 37 | 42 | | 5.11 | | | |
| USB 3 using paper cup | Silver conductive ink | 50 @ 80°C | Heater inside the cup | 73 | 218 | 72 | 5.25 | 4.70 | 923 | 4.84 | 0.60 |

### Phase 2

### Large Base Heater for iPad Charger

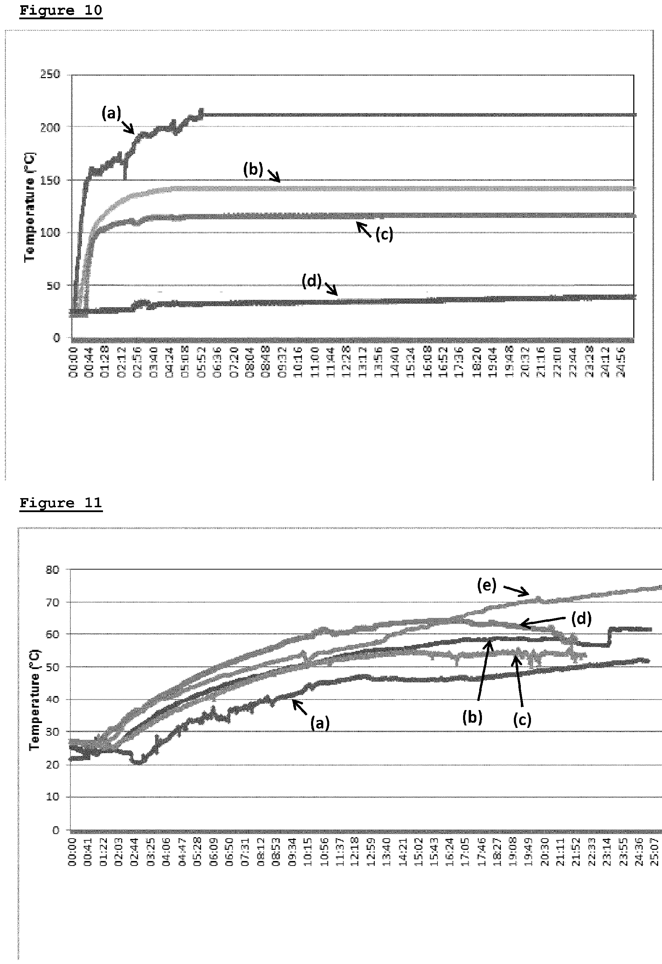

For phase 2 testing, USB charger which can provide maximum power of 25 watts was used to meet both USB 3 and iPad charger specifications. The heaters were packaged with water proof laminate and placed inside the noodle cup base. Summary of test configurations are indicated in Table 19. MAGGI noodle seasoning powder, 300 ml of water at room temperature and calcium phosphate powder were utilized for various test set-ups as shown in the table below. Calcium phosphate powder which is a chemical additive was used as an activating agent to accelerate the heating process. Heaters were printed with silver conductive ink and two different values of heaters: 2.8 Ω and 2.5 Ω were chosen for iPad charger applications. Fabricated large base heater is the same as shown in Figure 3. Performance summary of various test set-ups are presented in Table 20 and the temperature profile of each test set-up are illustrated in Figure 11. It can be seen that adding calcium phosphate powder to the seasoning powder produces a chemical reaction and accelerates the heating process above a particular activating temperature. In addition, 2 different mixing processes of calcium phosphate powder with seasoning powder were compared and were found that sprinkling method resulted in a higher final temperature. A difference in temperature of approximately 9 °C was achieved with the addition of calcium phosphate powder compared to using only seasoning powder.

**TABLE 19: Test set-up for heating cup with seasoning and calcium phosphate powder**

| Description | Plastic noodle cup contents | Water content (ml) | Water temperature | Heater location |
|---|---|---|---|---|
| Setup 1 | Noodle + seasoning | 300 | Room temperature | Inside the cup |
| Setup 2 | Noodle + seasoning + sprinkled 500mg Ca phosphate powder | 300 | Room temperature | Inside the cup |
| Setup 3 | Noodle + seasoning + dissolved 500mg Ca phosphate powder | 300 | Room temperature | Inside the cup |
| Setup 4 | Noodle + seasoning | 300 | Room temperature | Inside the cup |
| Setup 5 | Noodle + seasoning + sprinkled 500mg Ca phosphate powder | 300 | Room temperature | Inside the cup |

**TABLE 20: Performance summary for iPad charger application**

| Description | Tᵢ: initial temperature inside cup base | T_{f}: final temperature inside cup base | Effective Heater Area | USB Voltage | Resistance | Current | Power consumption | Energy Density |
|---|---|---|---|---|---|---|---|---|
| | (°C) | (°C) | (cm2) | (V) | (Ω) | (mA) | (watts) | (watt/cm²) |
| Set up 1 (300 ml water + noodle+seasoning) | 23.8 | 52.00 | 18.85 | 5.05 | 2.99 | 1770-00 | 8.94 | 0-47 |
| Set up 2 (300 ml water + noodte+seasoning+sprinkled 500 mg Ca phosphate powder) | 25 | 61.00 | 18.85 | 5.02 | 2.83 | 1840.00 | 9.24 | 0.49 |
| Set up 3 (300 ml water + noodle+seasoning+dissolved 500 mg Ca phosphate powder) | 26 | 54.022 | 18.85 | 5.02 | 2.83 | 1790.00 | 8.99 | 0.48 |
| Set up 4 (300 ml water + noodle+seasoning) | 27 | 64.00 | 18.85 | 4.91 | 2.54 | 1930.00 | 9.48 | 0.50 |
| Set up 5 (300 ml water + noodle+seasoning+sprinkled 500 mg Ca phosphate powder) | 26.7 | 74.50 | 18.85 | 4.91 | 2.48 | 1970.00 | 9.67 | 0.51 |

### Large Base Heater for USB 3 Source

In order to meet USB 3 source specifications, 5 Ω heaters printed with silver conductive ink were selected for evaluation. Testing conditions were similar to the previous test set up where the heaters were packaged with water proof laminate and placed inside the noodle cup base. A summary of two test configurations are indicated in Table 21. Due to lower energy density/cm2 drawn by the higher heater resistance, the effect of calcium phosphate powder was not significant. This also further confirms the fact that the chemical reaction and activation of this thermal effect takes place after reaching a critical point. Maximum final temperature of 57 °C was obtained for both set-ups (Table 22).

**TABLE 21: Test set-up for heating cup with seasoning and calcium phosphate powder**

| Description | Plastic noodle cup contents | Water content (ml) | Water temperature | Heater location |
|---|---|---|---|---|
| Setup 1 | Noodle + seasoning | 300 | Room temperature | Inside the cup |
| Setup 2 | Noodle + seasoning + sprinkled 500mg Ca phosphate powder | 300 | Room temperature | Inside the cup |

**TABLE 22: Performance summary for USB 3 application**

| Description | Tᵢ: initial temperature inside cup base | T_{f}: final temperature inside cup base | Effective Heater Area | V | R | I | P | Energy Density |
|---|---|---|---|---|---|---|---|---|
| | (°C) | (°C) | (cm2) | (V) | (Ω) | (mA) | (watts) | (watt/cm²) |
| Set up 1 | 28.00 | 57.00 | 18.85 | 5.20 | 5.75 | 999 | 5.19 | 0.28 |
| Set up 2 | 26.2 | 56.30 | 18.85 | 5.23 | 5.73 | 1000 | 5.23 | 0.28 |

### Dual Base Heater

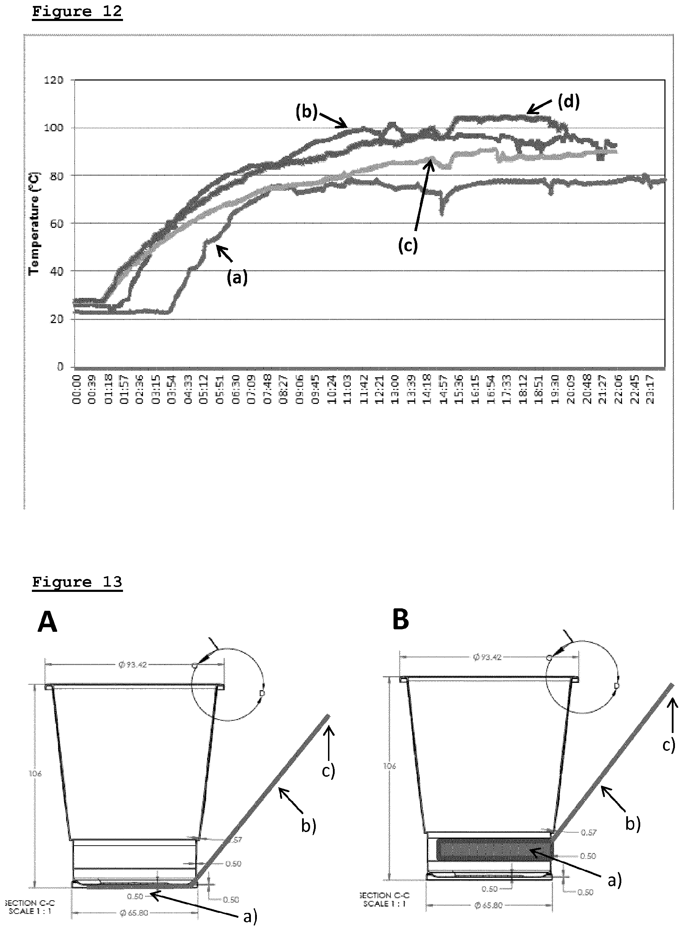

2 Ω to 3 Ω inner and outer base heaters printed with silver conductive ink were chosen for evaluation. Testing conditions were similar to the previous test set-up where the heaters were packaged with water proof laminate and placed inside the noodle cup base. Inner base heater was attached to the centre of the outer base heater and both heaters had their own separate power source to increase applied energy. Temperature profiles obtained are illustrated in Figure 12. Maximum final temperatures of 76 °C and 92 °C were obtained for both set ups, respectively.

### Parallel Dual Base Heater

Inner and outer base heaters were connected in parallel configuration to achieve a much lower total resistance of 1.5 Ω approximately in order to increase energy density per area. A single voltage source was used for testing and a fabricated dual base heater in parallel configuration was connected to one single power source. Temperature profile of each set up is presented in Figure 12. Maximum final temperature of 90 °C and 106 °C were obtained for both set ups, respectively.

### Bottom Circular Sleeve Heater for iPad Charger Application

In order to meet iPad charger source specifications, 2 Q bottom circular sleeve heaters printed with silver conductive ink were selected for evaluation. Testing conditions were similar to the previous test set up where the heaters were packaged with water proof laminate. For set up 1 the heater was placed on the outer surface of the Noodle Cup bottom sleeve area and for set up 2 the heater was placed inside the Noodle Cup base. The fabricated bottom circular sleeve heater is the same as presented in Figure 4. Temperature profiles of each set-up were determined in the same way as in the previous experiments. As the surface area of the heater is relatively much larger than other base heaters, the resultant energy density is significantly lower for the same amount of power. As a result maximum final temperature of only 29 °C and 28 °C were obtained for both set-ups, respectively.

### Example 3: Design examples of disposable heating cups of the present invention

### Heating cup with a sticker

Figure 13 illustrates a schematic presentation of disposable heating cups of the present invention comprising each a sticker with a printed electrical heating circuit. In Figure 13A, the application of a large base heater as illustrated in Figure 3, printed on a sticker and fixed to the outer base of a disposable cup, is shown. The strip with the printed USB connector and terminating with a printed USB connector head is free movable and can be connected to a USB port for providing the electricity for heating the printed heating circuit which is located at the base of the cup. Figure 13B shows the situation where a bottom circular sleeve heater is used as illustrated in Figure 5. Also here, the printed USB connector is free movable and capable of being plugged into a USB port of e.g. a personal computer.

### Sleeve for heating cup with an electrical heating circuit

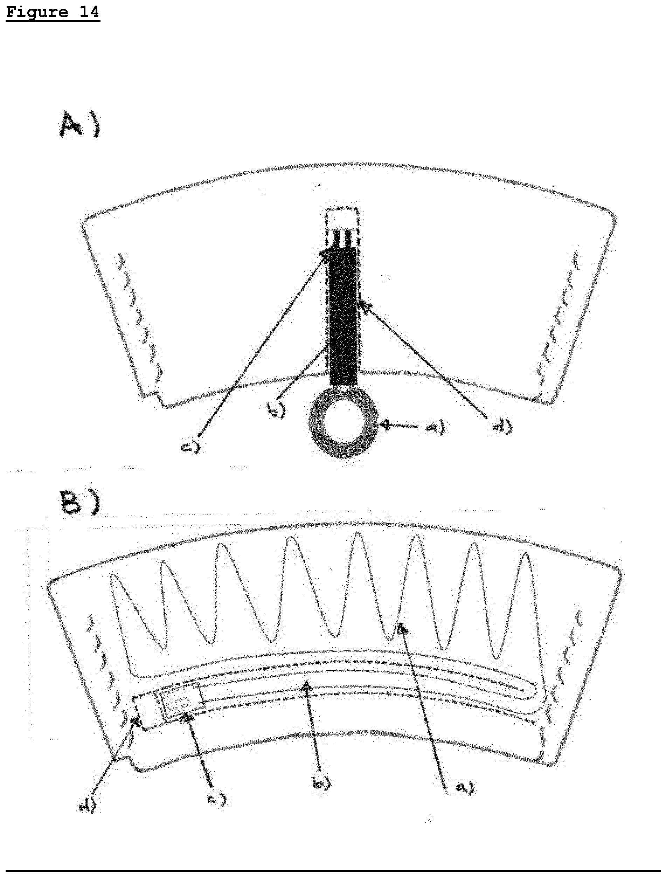

Figure 14 is a schematic presentation of sleeves for a disposable heating cup of the present invention comprising each a printed electrical heating circuit. Figure 14A illustrates a sleeve solution where the design of an outer base heater, as shown in Figure 4, is printed on the inside of the sleeve. The printed USB connector and connector head are further defined by a pre-cut tearing line which will allow separating the USB connector with the connector head from said sleeve and allowing free movement. The sleeve, after printing the electrical circuit, is fixed around a disposable heating cup and the part comprising the electrical heating circuit is fixed to the outer base of the heating cup. Upon use, a consumer in the possession of the heating cup with said sleeve, will detach the USB connector strip from the sleeve and plug it into a USB port of e.g. his personal computer in order to heat up the content of the heating cup.

Figure 14B shows an alternative solution to Figure 14A, where the electrical heating circuit is directly printed onto the inside surface of the sleeve. Here again as in Figure 14A, the USB connector and connector head is printed also on the inside of the sleeve and marked by a pre-cut tearing line. Upon use, a consumer can then easily detach the strip comprising the printed USB connector from the sleeve and attach it to a USB port.

## Claims

1. A disposable heating cup for heating a food product via USB interface **characterized in that** the heating cup comprises a printed electrical heating circuit and a printed USB connector linked to said electrical heating circuit.

2. The heating cup according to claim 1, comprising two or more printed electrical heating circuits, all linked to the printed USB connector.

3. The heating cup according to claim 1 or 2, wherein the heating cup comprises a sleeve and wherein the electrical heating circuit is printed onto the inner side of said sleeve.

4. The heating cup according to claim 1 or 2, wherein the heating cup comprises a sticker and wherein the electrical heating circuit is printed onto the sticker.

5. The heating cup according to claim 4, wherein the sticker is attached to a side wall of the heating cup, to a base of the heating cup or to a sleeve surrounding the heating cup.

6. The heating cup according to claim 1 or 2, wherein the electrical heating circuit is printed directly onto a surface of the heating cup.

7. The heating cup according to one of the claims 1 to 6, wherein the electrical heating circuit and the USB connector are printed with an electricity conducting material.

8. The heating cup according to claim 7, wherein the electricity conducting material is selected from the group consisting of silver-based conductive ink, copper-based conductive ink, conductive polymer ink, and carbon-based resistive ink.

9. The heating cup according to one of the claims 1 to 8, wherein the electrical heating circuit is designed in the form of a meander design, a serpentine design, a spiral design or a combination thereof.

10. The heating cup according to one of the claims 1 to 9, wherein the USB connector is printed onto a strip which is detachable from the heating cup at the one end which comprises a USB connector head.

11. The heating cup according to one of the claims 1 to 10, wherein the heating cup does not comprise an electrical cable or wire.

12. A sticker suitable for sticking onto a disposable heating cup for heating a food product, the sticker comprising at least one printed electrical heating circuit and a printed USB connector linked to the at least one electronic heating circuit.

13. A packaged food product comprising the disposable heating cup according to one of the claims 1 to 11.

14. The packaged food product according to claim 13 which is a soup, an instant noodle product, a coffee product, a tea product, a milk drink product or a chocolate drink product.

15. A method for heating a food or beverage product with making use of a disposable heating cup, where the heating cup comprises at least one printed electrical heating circuit and at least one printed USB connector linked to said electrical heating circuit, and where electricity for heating is provided to said printed electrical heating circuit through said printed USB connector.

## Patentansprüche

1. Einweg-Heizbehälter zum Erhitzen eines Nahrungsmittels über eine USB-Schnittstelle, **dadurch gekennzeichnet, dass** der Heizbehälter eine gedruckte elektrische Heizschaltung und einen gedruckten USB-Anschluss, der mit der elektrischen Heizschaltung verbunden ist, umfasst.

2. Heizbehälter nach Anspruch 1, umfassend zwei oder mehr gedruckte elektrische Heizschaltungen, die alle mit dem gedruckten USB-Anschluss verbunden sind.

3. Heizbehälter nach Anspruch 1 oder 2, wobei der Heizbehälter eine Hülle umfasst und wobei die elektrische Heizschaltung auf die Innenseite der Hülle gedruckt ist.

4. Heizbehälter nach Anspruch 1 oder 2, wobei der Heizbehälter einen Aufkleber umfasst und wobei die elektrische Heizschaltung auf den Aufkleber gedruckt ist.

5. Heizbehälter nach Anspruch 4, wobei der Aufkleber an einer Seitenwand des Heizbehälters, an einer Basis des Heizbehälters oder an einer Hülle, die den Heizbehälter umgibt, angebracht ist.

6. Heizbehälter nach Anspruch 1 oder 2, wobei die elektrische Heizschaltung direkt auf eine Oberfläche des Heizbehälters gedruckt ist.

7. Heizbehälter nach einem der Ansprüche 1 bis 6, wobei die elektrische Heizschaltung und der USB-Anschluss mit einem elektrisch leitenden Material gedruckt sind.

8. Heizbehälter nach Anspruch 7, wobei das elektrisch leitende Material ausgewählt ist aus der Gruppe bestehend aus leitfähiger Tinte auf Silberbasis, leitfähiger Tinte auf Kupferbasis, leitfähiger Polymertinte und widerstandsfähiger Tinte auf Kohlenstoffbasis.

9. Heizbehälter nach einem der Ansprüche 1 bis 8, wobei die elektrische Heizschaltung in Form einer Mäanderausführung, einer gewundenen Ausführung, einer spiralförmigen Ausführung oder einer Kombination davon ausgebildet ist.

10. Heizbehälter nach einem der Ansprüche 1 bis 9, wobei der USB-Anschluss auf einen Streifen gedruckt ist, der von dem Heizbehälter an dem einen Ende, das einen USB-Anschlusskopf umfasst, abnehmbar ist.

11. Heizbehälter nach einem der Ansprüche 1 bis 10, wobei der Heizbehälter kein elektrisches Kabel und keinen elektrischen Draht umfasst.

12. Aufkleber, der zum Aufkleben auf einen Einweg-Heizbehälter zum Erhitzen eines Nahrungsmittels geeignet ist, wobei der Aufkleber mindestens eine gedruckte elektrische Heizschaltung und einen gedruckten USB-Anschluss, der mit der mindestens einen elektronischen Heizschaltung verbunden ist, umfasst.

13. Verpacktes Nahrungsmittel, umfassend den Einweg-Heizbehälter nach einem der Ansprüche 1 bis 11.

14. Verpacktes Nahrungsmittel nach Anspruch 13, bei dem es sich um eine Suppe, ein Instantnudelprodukt, ein Kaffeeprodukt, ein Teeprodukt, ein Milchgetränkeprodukt oder ein Schokoladengetränkeprodukt handelt.

15. Verfahren zum Erhitzen eines Nahrungsmittels oder Getränkeprodukts unter Verwendung eines Einweg-Heizbehälters, wobei der Heizbehälter mindestens eine gedruckte elektrische Heizschaltung und mindestens einen gedruckten USB-Anschluss, der mit der elektrischen Heizschaltung verbunden ist, umfasst und wobei Elektrizität zum Erhitzen durch den gedruckten USB-Anschluss an die gedruckte elektrische Heizschaltung geliefert wird.

## Revendications

1. Tasse chauffante jetable destinée au chauffage d'un produit alimentaire par l'intermédiaire d'une interface USB **caractérisée en ce que** la tasse chauffante comprend un circuit imprimé de chauffage électrique et un connecteur USB imprimé relié audit circuit de chauffage électrique.

2. Tasse chauffante selon la revendication 1, comprenant deux circuits imprimés électriques de chauffage ou plus, tous reliés au connecteur USB imprimé.

3. Tasse chauffante selon la revendication 1 ou 2, dans laquelle la tasse chauffante comprend un manchon et dans laquelle le circuit de chauffage électrique est imprimé sur le côté interne dudit manchon.

4. Tasse chauffante selon la revendication 1 ou 2, dans laquelle la tasse chauffante comprend un autocollant et dans laquelle le circuit de chauffage électrique est imprimé sur l'autocollant.

5. Tasse chauffante selon la revendication 4, dans laquelle l'autocollant est fixé à une paroi latérale de la tasse chauffante, à une base de la tasse chauffante ou à un manchon entourant la tasse chauffante.

6. Tasse chauffante selon la revendication 1 ou 2, dans laquelle le circuit de chauffage électrique est imprimé directement sur une surface de la tasse chauffante.

7. Tasse chauffante selon l'une des revendications 1 à 6, dans laquelle le circuit de chauffage électrique et le connecteur USB sont imprimés avec un matériau conducteur d'électricité.

8. Tasse chauffante selon la revendication 7, dans laquelle le matériau conducteur d'électricité est choisi dans le groupe constitué d'une encre conductrice à base d'argent, d'une encre conductrice à base de cuivre, d'une encre polymère conductrice et d'une encre résistive à base de carbone.

9. Tasse chauffante selon l'une des revendications 1 à 8, dans laquelle le circuit de chauffage électrique est conçu sous la forme d'une conception en méandres, d'une conception en serpentin, d'une conception en spirale ou d'une combinaison de celles-ci.

10. Tasse chauffante selon l'une des revendications 1 à 9, dans laquelle le connecteur USB est imprimé sur une bande qui est détachable de la tasse chauffante à une extrémité qui comprend une tête de connecteur USB.

11. Tasse chauffante selon l'une des revendications 1 à 10, dans laquelle la tasse chauffante ne comprend pas de câble ou de fil électrique.

12. Autocollant destiné à être collé sur une tasse chauffante jetable pour le chauffage d'un produit alimentaire, l'autocollant comprenant au moins un circuit imprimé de chauffage électrique et un connecteur USB imprimé relié à l'au moins un circuit électronique de chauffage.

13. Produit alimentaire emballé comprenant la tasse chauffante jetable selon l'une des revendications 1 à 11.

14. Produit alimentaire emballé selon la revendication 13 qui est une soupe, un produit instantané à base de nouilles, un produit de café, un produit de thé, un produit lacté à boire ou un produit chocolaté à boire.

15. Procédé de chauffage d'un produit alimentaire ou de boisson à l'aide d'une tasse chauffante jetable, dans lequel la tasse chauffante comprend au moins un circuit imprimé de chauffage électrique et au moins un connecteur USB imprimé relié audit circuit électrique de chauffage et où de l'électricité pour le chauffage est fournie audit circuit imprimé électrique de chauffage par l'intermédiaire dudit connecteur USB imprimé.
